# EUROPEAN PATENT SPECIFICATION

(11) **EP 3 283 444 B1**
(45) Date of publication and mention of the grant of the patent: **04.11.2020**
(21) Application number: 16726163.5
(22) Date of filing: 15.04.2016
(51) Int. Cl.: G02B 17/06, G02B 17/00, C03B 40/00, C03B 23/035, G21K 1/06, G02B 5/08, G02B 5/10

(54) **METHOD FOR MANUFACTURING AN OPTICAL UNIT COMPRISING A PLURALITY OF ASPHERICAL GLASS SHEETS**
VERFAHREN ZUR HERSTELLUNG VON EINER OPTISCHEN EINHEIT MIT EINER VIELZAHL VON ASPHÄRISCHEN GLASSCHEIBEN
PROCÉDÉ DE FABRICATION D'UNE UNITÉ OPTIQUE COMPRENANT UNE PLURALITÉ DE FEUILLES DE VERRE ASPHÉRIQUES

(30) Priority: 15.04.2015 IT TO20150219
(43) Date of publication of application: 21.02.2018
(73) Proprietor: Istituto Nazionale di Astrofisica, 00136 Roma (IT)
(72) Inventor: BASSO, Stefano, 00136 Roma (IT); CIVITANI, Marta Maria, 00136 Roma (IT); PARESCHI, Giovanni, 00136 Roma (IT)
(74) Representative: Lisa, Elisabetta
(86) International application number: PCT/IB2016/052165
(87) International publication number: WO 2016/166721

(56) References cited:
- EP-A1- 2 653 897
- WO-A1-2011/029852
- WO-A1-2015/022643
- ROBERT A. SCHWARZER: "Crystallography and Microstructure of Thin Films Studied by X-Ray and Electron Diffraction", MATERIALS SCIENCE FORUM, vol. 287-288, 1 January 1998 (1998-01-01), pages 23-60, XP055116454, DOI: 10.4028/www.scientific.net/MSF.287-288.23

## Description

The present invention relates to a process for manufacturing an optical element by the integration of glass sheets.

The invention is preferably, but not exclusively, applied for producing grazing incidence optics for X-ray telescopes, to which a particular reference will be made below, without loss of generality.

X-ray telescopes can operate only from space due to the opacity of the Earth's atmosphere to wavelengths of the X-rays being considered. In order to improve (decrease) the ratio of weight to effective area of grazing incidence optics, the use of glass in suitably formed thin sheets is taken into consideration since it allows X-ray telescopes with increasingly larger size to be produced, for example with an effective area in the order of few m², while maintaining the weight of the system within the limits set by the current launch vehicles for the orbit insertion of such systems. Effective areas in the order of 0,1-4 m² are obtained by using a series of parabolic and hyperbolic annular mirrors, having small thicknesses (less than or equal to 2 mm, typically about 1 mm or less), arranged co-axially and co-focally within one another, that is commonly called as "nested structure". Such mirrors reach diameters ranging from few centimeters to several meters.

Generally for the production of X-ray astronomy mirrors based on the use of thin sheets made of glass or aluminium, each mirror is divided into a plurality of sectors. Conveniently, the homologous sectors of a series of concentric mirrors are preassembled (integrated) to one another to form stacks of mirror sectors, or optical units, which are later assembled to one another such to form the complete mirror.

It is known to produce mirror sectors from flat, thin glass sheets by means of a hot-forming technique called as "slumping", which consists in replicating in a glass sheet the shape of an appropriate mold, for example with a cylindrical or aspherical shape. The final aspherical shape then is obtained or fixed by the integration process. According to a known technique, in order to form the sheet, a muffle made of a material resistant to high temperatures and repeated thermal cycles is used, comprising a base element defining a central cavity and a cover.

In the central cavity of the base element a mold is arranged, whose upper surface has the shape which is desired to be given to the glass sheet.

In the step preparing the process, the glass sheet is rested on the mold. A thin metal foil is arranged on the sheet and therefore the cover is closed, by peripherally tightly restraining the metal foil between the base element and the cover itself.

Therefore the muffle is placed in an oven and subjected to a thermal cycle having the purpose of reducing the glass viscosity, by effect of which the sheet collapses on the mold and reproduces the shape thereof.

In order to ensure a perfect contact of the sheet with the surface of the mold, a pressure is applied in the upper chamber of the muffle comprised between the cover and the metal foil, such that the latter applies a uniform pressure on the glass sheet. The aforesaid known process has the drawback of an insufficient process repeatability introduced by the metal foil; it may exhibit defects or form creases which translate into local deformations of the glass sheet.

Moreover since possible imperfections of the metal foil may be reproduced on the surface of the glass sheet, the latter must necessarily be arranged with the optical surface in contact with the mold ("direct slumping"), which implies making the mold with a high level of surface finish.

In order to overcome the above drawbacks, an alternative hot slumping technique has been studied which is described in publication WO 2015/022643 A1 by the same applicant. According to such technique, a peripheral edge of the glass sheet being processed is retained between the body and the cover of the muffle with a given freedom of movement, and pressure is exerted directly on the glass sheet, thus eliminating the resort to the metal foil as the pressing element. Therefore repeatability problems induced by the foil are eliminated, and it is possible to perform both direct slumping and indirect slumping on sheets. Publication EP 2 653 897 A1 discloses a manufacturing process of particular interest.

Although such improvement, the hot slumping technique requires very long operating time due to thermal cycles for heating and cooling the sheets, and therefore it is complex and expensive.

The object of the present invention is to provide a method for manufacturing optical units, which allows drawbacks related to known techniques and mentioned above to be solved.

Such object is achieved by a process according to claim 1.

For a better understanding of the present invention, a preferred embodiment of the invention will now be described below by way of non- limitative example and with reference to the annexed drawings, in which:

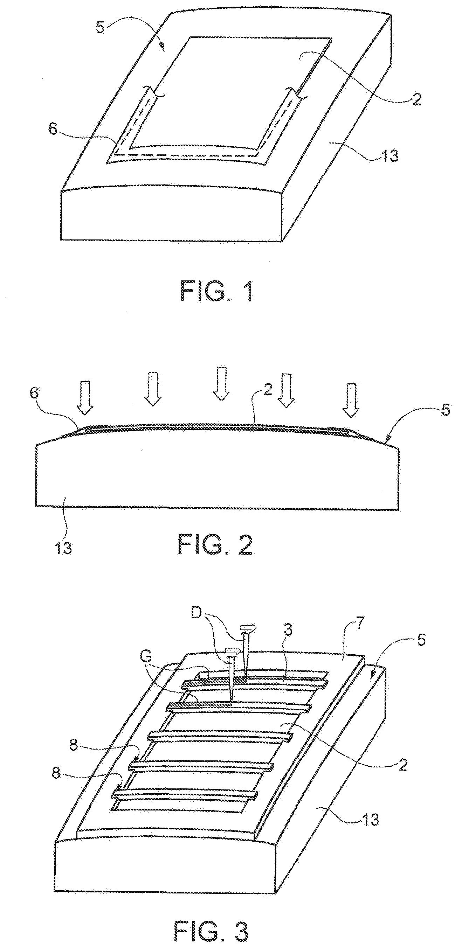

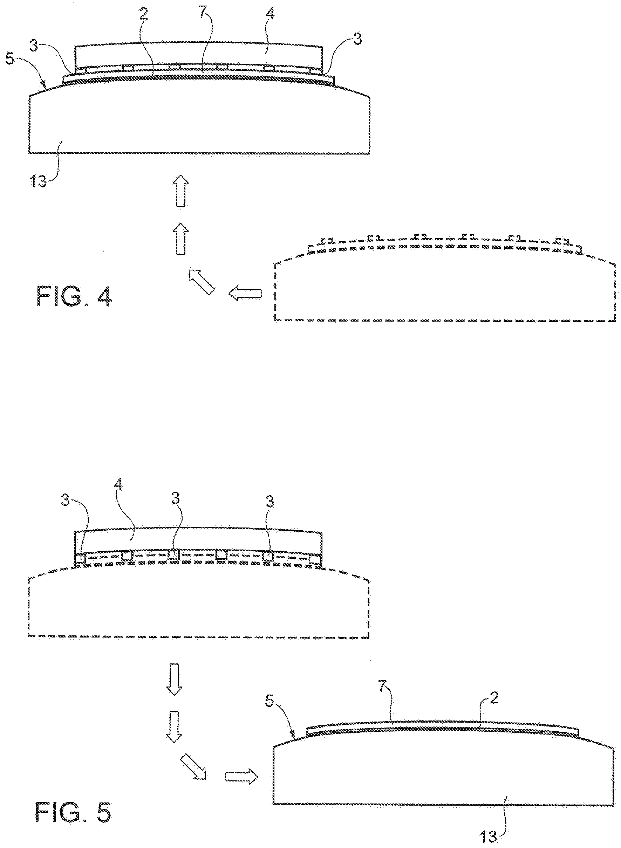

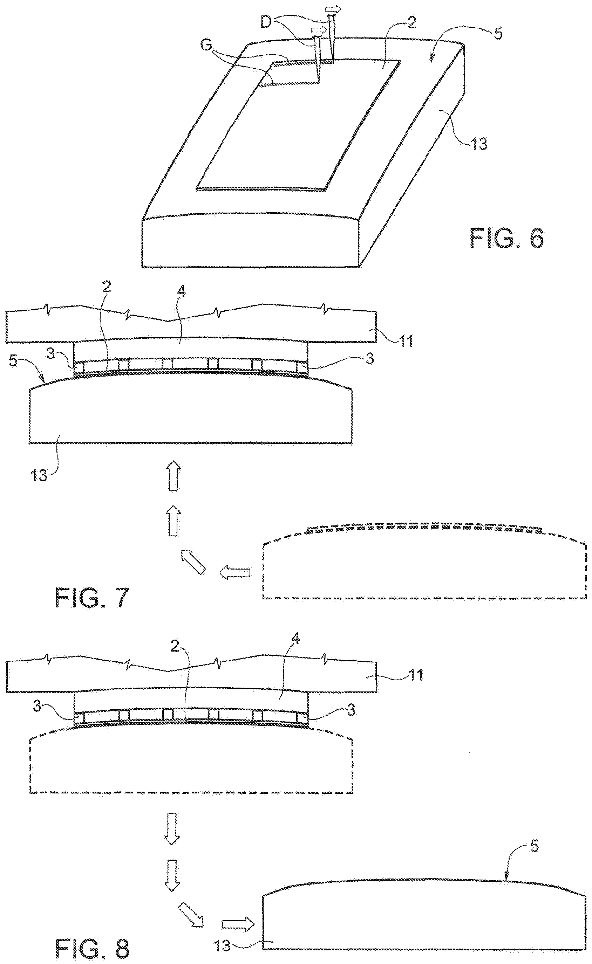

Figures 1 to 8 diagrammatically are views of subsequent steps of the process of the present invention; and
Figure 9 diagrammatically is an optical unit manufactured by the process of the present invention.

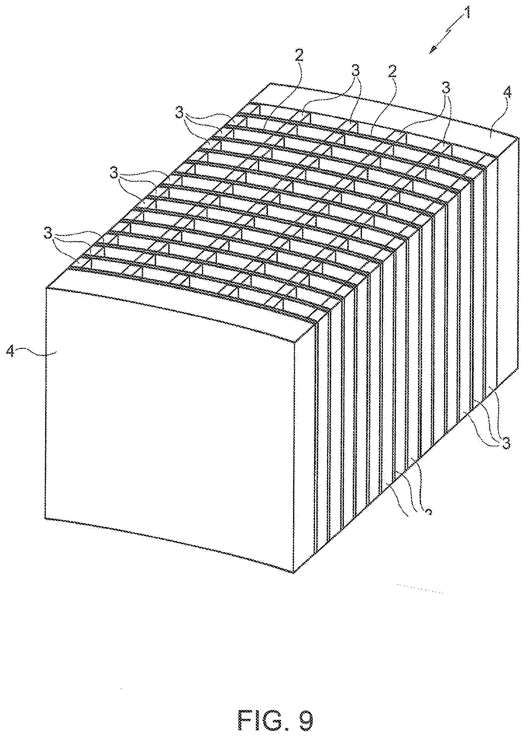

With reference to figure 9 it diagrammatically shows an optical unit generally denoted by numeral 1 which is a module for producing an X-ray grazing incidence optic.

The optical unit 1 comprises a plurality of glass sheets 2 with aspherical shape, particularly parabolic or hyperbolic shape, stacked on one another to form a stack 10. Sheets 2 are connected and kept apart from one another by a plurality of spacing bars 3.

The optical unit 1 further comprises at least one end shell 4 (or backplane), acting for giving to the stack 10 the required stability and stiffness. Optionally there are provided two backplanes 4 that enclose the stack 10 of glass sheets. The (or each) backplane 4 is connected by bars 3 to the end sheets of the stack.

Sheets 2 are opportunely made of glass with a thickness equal to 0,3-0,6 mm. For instance glasses called as AF32 or D263 manufactured by Schott AG, or Eagle XG® glass by Corning can be used. Typical dimensions, for an optical unit arranged at an average radius of 1 m, are 200 mm x 200 mm. An optical unit can comprise, for example, 40 glass sheets.

The glass may be provided with a reflective coating, for example Au, Pt, or a multilayer Pt/C, Au/C, W/Si, Ni/Co.

Bars 3 are opportunely made of glass (for instance BK7 or Borofloat® 33 by Schott AG) or of graphite, and have a rectangular cross-section.

Between each pair of adjacent sheets 2 there is provided a plurality of bars 3, two of them being arranged as close as possible to the opposite sides of the sheets 2 and the other ones being generally spaced equally transversely from each other.

The number, size and position of the bars necessary to give the final shape to the glass are determined by numerical simulations; for instance the bars can be 6 and can have a width of 2 mm (in a direction parallel to sheets 2) and a thickness of 2,8 mm in the direction perpendicular to the sheets 2.

According to the present invention the optical unit 1 is manufactured from glass sheets that are flat or opportunely pre-bent, for example by a gravity hot operation, which are cold deformed before the integration till taking the desired shape, and then kept in the deformed shape by means of the integration.

The cold deformation (slumping) occurs by adhering the sheet 2 to a reference surface 5 whose geometry is desired to be reproduced, as it will be better described below.

The reference surface 5 is conveniently defined by the upper surface of a mold 13 that can be made of a porous material (for instance porous aluminium available on the market under the trademark METAPOR® by Portec Ltd.) or non-porous material (for instance Zerodur or BK7 glass by Schott AG, fused silica, aluminium).

The process can be carried out both by direct slumping technique, i.e. where the optical side of the sheet is placed in contact with the reference surface 5, and by indirect slumping technique i.e. where the back of the sheet is arranged in contact with the reference surface 5.

The process is described below, by way of non-limitative example, with reference to the cold direct slumping.

On the reference surface 5 a flat sheet 2 is arranged beforehand with the optical side (provided with the coating or not) facing it.

Later, in the case the mold 13 is made of a non-porous material, a peripheral sealing element 6, for instance composed of an electrostatically self-adhesive vinyl film with a thickness of 0.15 mm, is placed on the reference surface 5, with its own inner edges overlapping the flat sheet 2.

Therefore a depression is generated between the sheet 2 and the reference surface 5, such to cold deform the sheet 2 by adhering it onto the reference surface 5. The sheet 2 therefore takes the desired geometrical configuration. The depression can be generated by sucking air through one or more ducts (not shown) that end on the reference surface 5 and are connected with a vacuum source, or through the same reference surface 5, if the mold 13 is made of porous material.

Therefore the bars 3 are rested on the sheet 2, which are held in place by a perimetral positioning mask 7 having inner notches 8 where the ends of the bars 3 are fitted. Conveniently the mask 7 has a thickness smaller than the bars 3.

In a following step, an appropriate amount of glue G is arranged on the bars 3 preferably by automatic dispensers D, such to create - with integration ended - a layer with a predetermined thickness. For example the glue being employed can be EP30-2 marketed by Masterbond Inc..

Then the reference surface 5 is moved such to bring the bars 3 (or better the glue thereon) in contact with the preceding element of the stack, supported by an integration support 11. The term "preceding element of the stack" means the (or one of the) backplanes 4, if the sheet 2 under treatment is the first sheet of the stack 10, or the preceding sheet 2. Although in the shown example the reference surface 5 is moved, on the contrary it is possible to move the integration support 11, it being sufficient to set a relative movement between the reference surface 5 and the preceding element of the stack.

The relative position and orientation between the reference surface 5 and the integration support 11 is kept for the time of polymerization of the glue.

The movement and the relative position being kept during the polymerization step are performed by actuators (not shown) controlled in the position according to a feedback control.

Upon the end of the glue polymerization, the reference surface and so the sheet 2 on which the bars 3 rest, is brought back to the starting position.

In a following step, the glue is also distributed on the sheets 2, at the areas corresponding to the position of the bars 3.

Therefore the reference surface is again moved such to bring the sheet 5 in the final gluing configuration with respect to the preceding element of the stack.

Also in this case, such position is kept for all the polymerization time of the glue, then the depression holding the sheet 2 in contact with the reference surface 5 is eliminated and the reference surface is brought back in the starting position.

The process is repeated till producing the entire stack.

The last step of the process is the possible integration of the other backplane 4 on the already produced stack 10 of sheets 2, if necessary.

From an analysis of the characteristics of the described process, the advantages thereof are clear.

Since the deformation (slumping) of sheets 2 is made as a cold deformation, the time for performing the thermal cycles of the hot slumping is eliminated. Therefore the process is much more fast and cheap than the known techniques.

Finally it is clear that it is possible to make changes and variants to the described process without for this reason departing from the scope of protection defined in the claims.

In particular the slumping can be carried out indirectly, that is by arranging the sheet with the back, instead of the optical side, in contact with the reference surface.

The number and shape of the sheets of the optical unit can vary, as well as the materials and thicknesses of the sheets, of the possible optical coating and of the integration bars can vary.

If the process is used for manufacturing grazing incidence optics for X-rays with a aspherical configuration Wolter I, the optical unit comprises a stack of parabolic sheets and a stack of hyperbolic sheets separated but coaxial and co-focal to one another. Conveniently the cold deformation and integration steps can be carried out contemporaneously for a pair of sheets, parabolic and hyperbolic respectively, belonging to the respective stacks.

In this case the reference surfaces have to be as a single piece or anyway kept fixed with one another by a rigid connection or by an active control during the integration step.

## Claims

1. Process for manufacturing an optical unit (1) comprising a plurality of glass sheets (2) having an aspherical shape arranged superimposed and spaced apart to form a stack (10), **characterized in that** it comprises the steps of:
- arranging a flat glass sheet (2) on a reference surface (5) having the geometry desired to be reproduced;
- cold deforming said sheet (2) such to adhere it onto the reference surface (5);
- integrating said sheet (2) with a preceding element (4; 2) of said stack (10) in a predetermined relative position; and
- repeating the preceding steps till ending the stack,
and **in that** said cold deforming step of said sheet (2) takes place until making said sheet (2) to assume the geometry of said reference surface (5),
and **in that** said integration step maintains the geometry assumed by said sheet (2), and **in that** said integration step comprises the step of fastening said sheet (2) in a position spaced from the preceding element (4; 12) of the stack (10) by means of bars (3) arranged spaced apart from one another.

2. Process according to claim 1, **characterized in that** said cold deformation step is performed by generating a depression between said sheet (2) and said reference surface (5).

3. Process according to claim 2, **characterized in that** said depression is obtained by the aid of a peripheral sealing element (6) cooperating with an edge of said sheet (2) and with said reference surface (5).

4. Process according to claim 3, **characterized in that** said sealing element (6) is shaped like a frame.

5. Process according to claim 3 or 4, **characterized in that** said sealing element (6) is composed of a polymer film.

6. Process according to any of the preceding claims, **characterized in that** said integration step comprises the operation of fastening a plurality of said bars (3) to the preceding element (4; 2) of the stack (10), and the operation for fastening said sheet (2) to said bars (3).

7. Process according to claim 6, **characterized in that** said fastening operations are performed by gluing.

8. Process according to claim 7, **characterized in that** said integration step comprises the following operations:
- arranging said bars (3) on said sheet (2);
- arranging a layer of glue (G) onto said bars (3);
- making a relative movement between said reference surface (5) and said preceding element (4; 2) of the stack such to bring said bars (3) in contact with said preceding element (4;2) of the stack; and
- keeping the relative position between said reference surface (5) and said preceding element (4;2) of the stack (10) for a time at least equal to the polymerization time of the glue; and
- separating said sheet (2) from said bars (5).

9. Process according to claim 7 or 8, **characterized in that** said integration step comprises the following further operations:
- arranging a layer of glue on said sheet (2) in a position corresponding to the bars (3);
- making a relative movement between said reference surface (5) and said preceding element (4; 2) of the stack (10) such to bring said sheet (2) in contact with said bars (3);
- keeping the relative position between said reference surface (5) and said preceding element (4;2) of the stack for a time at least equal to the polymerization time of the glue;
- separating said sheet (2) from the reference surface (5).

## Patentansprüche

1. Herstellungsverfahren von einen optischen Einheit (1), die mehrere Glasplatten (2) umfasst, die eine asphärische Form aufweisen und überlagert und beabstandet sind, um einen Stapel (10) zu bilden, **dadurch gekennzeichnet, dass** es folgende Schritte umfasst:
- Anordnung einer flachen Glasplatte (2) auf einer Referenzfläche (5), die die gewünschte geometrische Form aufweist, um reproduziert zu werden;
- Kaltverformung der Platte (2), damit sie an der Referenzfläche (5) haftet;
- Integrierung der Platte (2) mit einem vorherigen Element (4, 2) des Stapels (10) in einer vorbestimmten relativen Position; und
- Wiederholung der vorherigen Vorgänge bis zum Ende des Stapels,
und dass die Kaltverformungsschritt der Platte (2) erfolgt, indem die Platte (2) die geometrische Form der Referenzfläche (5) annimmt,
und dass der Integrationsschritt die geometrische Form beibehält, die von der Platte (2) angenommen wird,
und dass der Integrationsschritt den Schritt des Fixierens der Platte (2) in einer Position umfasst, die von dem vorherigen Element (4; 12) des Stapels (10) beabstandet ist, durch Stangen (3), die voneinander beabstandet angeordnet sind.

2. Verfahren nach Anspruch 1, **dadurch gekennzeichnet, dass** der Kaltverformungsschritt durch Erzeugen einer Vertiefung zwischen der Platte (2) und der Referenzfläche (5) ausgeführt wird.

3. Verfahren nach Anspruch 2, **dadurch gekennzeichnet, dass** die Vertiefung mit Hilfe eines peripheren Dichtungselements (6) erhalten wird, das mit einer Kante der Platte (2) und mit der Referenzfläche (5) zusammenwirkt.

4. Verfahren nach Anspruch 3, **dadurch gekennzeichnet, dass** das Dichtungselement (6) die Form eines Rahmens aufweist.

5. Verfahren nach Anspruch 3 oder 4, **dadurch gekennzeichnet, dass** das Dichtungselement (6) aus einem Polymerfilm besteht.

6. Verfahren nach einem der vorhergehenden Ansprüche, **dadurch gekennzeichnet, dass** der Integrationsschritt den Schritt des Fixierens von mehreren Stangen (3) an dem vorherigen Element (4, 2) des Stapels (10) und den Schritt des Fixierens der Platte (2) an den Stangen (3) umfasst.

7. Verfahren nach Anspruch 6, **dadurch gekennzeichnet, dass** die Fixierschritte durch Kleben ausgeführt werden.

8. Verfahren nach Anspruch 7, **dadurch gekennzeichnet, dass** der Integrationsschritt folgende Schritte umfasst:
- Anordnung der Stangen (3) auf der Platte (2);
- Anordnung von einen Schicht Kleber (G) auf die Stangen (3) auftragen;
- Erzeugung von einen Relativbewegung zwischen der Referenzfläche (5) und dem vorherigen Element (4, 2) des Stapels, um die Stangen (3) mit dem vorherigen Element (4, 2) des Stapels in Kontakt zu bringen; und
- Behalten der relativen Lage zwischen der Referenzfläche (5) und dem vorherigen Element (4, 2) des Stapels (10) für eine Zeit, die mindestens der Polymerisationszeit des Klebers entspricht; und
- Trennung der Platte (2) von den Stangen (5).

9. Verfahren nach Anspruch 7 oder 8, **dadurch gekennzeichnet, dass** der Integrationsschritt folgenden weitere Schritte umfasst:
- Anordnung von einer Schicht Kleber auf der Platte (2) an einer Position, die den Stangen (3) entspricht;
- Erzeugung von einer Relativbewegung zwischen der Referenzfläche (5) und dem vorherigen Element (4, 2) des Stapels (10), um die Platte (2) mit den Stangen (3) in Kontakt zu bringen;
- Behalten der relativen Lage zwischen der Referenzfläche (5) und dem vorherigen Element (4, 2) des Stapels für eine Zeit, die mindestens der Polymerisationszeit des Klebers entspricht;
- Trennung der Platte (2) von der Referenzfläche (5).

## Revendications

1. Procédé de fabrication d'une unité optique (1), comprenant une pluralité de plaques de verre (2), de forme asphérique, superposées et espacées de manière à former une pile (10), **caractérisé en ce qu'**il comprend les opérations suivantes:
- placer une plaque de verre plate (2) sur une surface de référence (5), qui a la forme géométrique requise pour être reproduite;
- déformer à froid la plaque (2) de manière à la faire adhérer à la surface de référence (5);
- intégrer la plaque (2) avec un élément précédent (4, 2) de la pile (10), dans une position relative prédéterminée; et
- répéter les opérations précédentes, jusqu'à la fin de la pile,
et que l'opération de déformation à froid de la plaque (2) a lieu en amenant la plaque (2) à prendre la forme géométrique de la surface de référence (5),
et que l'opération d'intégration conserve la forme géométrique prise par la plaque (2),
et que l'opération d'intégration comprend l'opération de fixation de la plaque (2) dans une position espacée de l'élément précédent (4; 12) de la pile (10) au moyen de barres (3) disposées espacées les unes des autres.

2. Procédé selon la revendication 1, **caractérisé en ce que** l'opération de déformation à froid est réalisée en générant une dépression entre la plaque (2) et la surface de référence (5) .

3. Procédé selon la revendication 2, **caractérisé en ce que** la dépression est obtenue à l'aide d'un élément d'étanchéité périphérique (6), qui coopère avec un bord de la plaque (2) et avec la surface de référence (5).

4. Procédé selon la revendication 3, **caractérisé en ce que** l'élément d'étanchéité (6) a la forme d'un cadre.

5. Procédé selon la revendication 3 ou 4, **caractérisé en ce que** l'élément d'étanchéité (6) est composé d'un film polymère.

6. Procédé selon l'une des revendications précédentes, **caractérisé en ce que** l'opération d'intégration comprend l'opération de fixation d'une pluralité de barres (3) sur l'élément précédent (4, 2) de la pile (10), et l'opération de fixation de la plaque (2) aux barres (3).

7. Procédé selon la revendication 6, **caractérisé en ce que** les opérations de fixation sont effectuées par collage.

8. Procédé selon la revendication 7, **caractérisé en ce que** l'opération d'intégration comprend les opérations suivantes:
- disposer les barres (3) sur la plaque (2);
- disposer une couche de colle (G) sur les barres (3) ;
- produire un mouvement relatif entre la surface de référence (5) et l'élément précédent (4, 2) de la pile, de manière à mettre les barres (3) en contact avec l'élément précédent (4, 2) de la pile; est
- maintenir la position relative entre la surface de référence (5) et l'élément précédent (4, 2) de la pile (10) pendant un temps au moins égal au temps de polymérisation de la colle; est
- séparer la plaque (2) des barres (5).

9. Procédé selon les revendications 7 ou 8, **caractérisé en ce que** l'opération d'intégration comprend les autres opérations suivantes:
- disposer une couche de colle sur la plaque (2) dans une position correspondant aux barres (3);
- produire un mouvement relatif entre la surface de référence (5) et l'élément précédent (4, 2) de la pile (10), de manière à mettre la plaque (2) en contact avec les barres (3);
- maintenir la position relative entre la surface de référence (5) et l'élément précédent (4, 2) de la pile pendant un temps au moins égal au temps de polymérisation de la colle;
- séparer la plaque (2) de la surface de référence (5) .
